# EUROPEAN PATENT APPLICATION

(11) **EP 2 450 246 A1**
(43) Date of publication of application: **09.05.2012**
(21) Application number: 11160415.3
(22) Date of filing: 30.03.2011
(51) Int. Cl.: B60T 1/10, F03G 3/00

(54) **Energy recovering device for recovering energy in a vehicle**

(30) Priority: 03.11.2010 IT MI20102041
(71) Applicant: ZanettiStudios S.r.l., 20122 Milano (IT)
(72) Inventor: Zanetti, Giancarlo, 20122 Milano (IT)
(74) Representative: Pezzoli, Ennio

(57) **Abstract**

An energy-recovering device for recovering energy in a vehicle (100) is proposed. The energy-recovering device includes a movable mass (110), and guiding means for driving the movable mass along a movement direction (α) having at least one vertical component (y) when the vehicle is in use. The movable mass during a braking phase of the vehicle is driven upwards along the movement direction (α), thereby converting a portion of kinetic energy of the movable mass into a potential energy of the movable mass. After the braking phase of the vehicle the movable mass (110 ) is driven downwards along the movement direction thereby converting a portion of the potential energy of the movable mass into a further kinetic energy of the movable mass. The energy-recovering device also includes recovering means (115) for recovering a portion of the further kinetic energy of the movable mass for the operation of the vehicle.

## Description

The present invention relates to an energy-recovering device for recovering energy in a vehicle. More in detail, the present invention provides a device for recovering a portion of kinetic energy associated with a movable mass equipped on a moving vehicle, when it undertakes a braking phase.

Currently, a major goal in the field of vehicles design is a reduction of energy-consumption. In particular, it is desirable to reduce energy-consumption without compromising vehicle performance, a situation that is very advantageous both in terms of operating cost and in terms of environmental pollution. To achieve such consumptions reduction the vehicles design is mainly focused on optimisation of an energy conversion into useful work for the vehicle. However, the thermodynamic laws impose a limit to the efficiency with which an engine (either of internal combustion type or of other type, for example, electric) is able to convert energy into useful work.

In addition, considering a vehicle trip characterized by a non-uniform speed motion, it involves a non-optimal consumption of available energy, irrespectively of any consumption optimisation. In fact, such trip will include a plurality of acceleration phases (in order to start a movement from a static condition of the vehicle or to increase vehicle speed) and braking phases (in order to decrease the speed of the vehicle or to arrest its movement). For example, in the case of a motor vehicle, during a braking phase a kinetic energy of the moving vehicle - directly proportional to the mass and quadratically proportional to the vehicle speed - is completely or partially (depending on whether the braking phase lead to a stopping or to a slowing down of the vehicle, respectively) dispersed, by blocking the wheels, in a friction force that takes effect between the wheels and a road surface. In addition, a driving force needed to move the vehicle from a static condition is greater than the driving force needed to maintain a motion condition already established; consequently, an energy consumption peak occurs when changing from a static condition to a motion condition.

In general terms, the solution according to one or more embodiments of the present invention is based on the idea of recovering a portion of the kinetic energy associated with a movable mass equipped in a vehicle for an operation thereof.

In particular, one or more aspects of the solution according to specific embodiments of the invention are set out in the independent claims, with advantageous features of the same solution that are set out in the dependent claims (whose wording is herein incorporated *verbatim* by reference).

More specifically, one aspect of a solution according to one embodiment of the invention provides an energy-recovering device for recovering energy in a vehicle. The energy-recovering device includes a movable mass, and guiding means for driving the movable mass along a movement direction having at least a vertical component when the vehicle is in use. The movable mass during a braking phase of the vehicle is driven upward along the movement direction thereby converting a portion of kinetic energy of the movable mass into potential energy of the movable mass. After the braking phase of the vehicle, the movable mass is driven downward along the movement direction thereby converting a portion of the potential energy of the movable mass in an additional kinetic energy of the movable mass. The energy-recovering device also includes recovering means for recovering a portion of the additional kinetic energy of the movable mass for an operation of the vehicle.

Another aspect of a solution according to an embodiment of the invention provides a corresponding method (with the same advantageous features recited in the dependent claims for the energy-recovery device which apply *mutatis mutandis* to the method).

A solution according to one or more embodiments of the invention, as well as additional features and its advantages will be better understood with reference to the following detailed description of an embodiment thereof, given purely by way of a non-restrictive indication and without limitation, to be read in conjunction with the attached figures (wherein corresponding elements are denoted with equal or similar references and their explanation is not repeated for the sake of brevity). In this respect, it is expressly understood that the figures are not necessarily drawn to scale (with some details that may be exaggerated and/or simplified) and that, unless otherwise specified, they are simply intended to conceptually illustrate the structures and procedures described herein. In particular:
FIG.1 is a schematic side view of a moving vehicle equipped with an energy-recovery device according to an embodiment according to the present invention;
FIG.2 is a schematic side view of the vehicle of FIG.1 during a braking phase;
FIG.3 is a schematic side view of the vehicle of FIG. at a restarting phase.

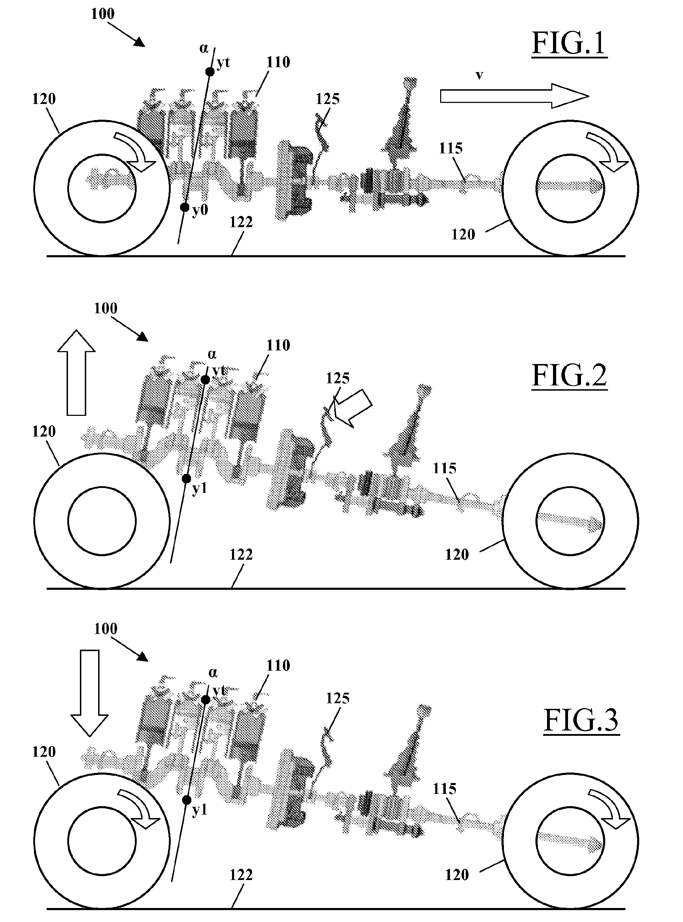

Referring to FIG.1, it illustrates a schematic side view of a moving vehicle 100, equipped with an energy-recovering device according to an embodiment of the present invention. In particular, the vehicle 100 is a motor vehicle and includes an engine 110, which may be both of the internal combustion type or of other type, for example, electric; the vehicle 100 also includes a transmission system 115, for transferring a mechanical movement generated by the engine 110 to one or more wheels 120 (generally, two or four) so that their rolling on a surface 122 *(e.g.,* a road) forces the vehicle 100 to move. The engine 110 is located in a rear position on the vehicle 100. The vehicle 100 also includes a braking system 125, for the arresting of the same by a driver.

The vehicle 100 further includes an energy-recovering device according to an embodiment of the present invention. More in detail, the engine 110 is engaged with suitable guiding means (not shown in the figure) and is formed in such a way as to be able to slide along a direction α having at least a vertical component y without interrupting its operation. For example, the direction α may have a tilt angle of 45° with respect to the vertical component y, so that an upper end of the guiding means is directed toward the front of the vehicle 100. Moreover, the guiding means is able to guide the engine 110 from a rest position - having a rest vertical component y0 - to a top position - having a top vertical component yt.

In this way the engine 110 is free to move along the direction α and the energy-recovering device is able to exploit its high mass as movable mass to perform an energy conversion as will be described in greater detail later on.

During a trip, the vehicle 100 moves at a speed v that may vary depending on environmental conditions (e.g., road and traffic conditions). This speed v is also associated with each component of the vehicle 100, as well as with any object or person boarded on the vehicle 100. As a result, the vehicle 100, each of its components, each object and/or person being transported have a kinetic energy proportional to its own mass m and quadratically proportional to the same speed v. In particular, the engine 110 also has a kinetic energy proportional to its mass m and quadratically proportional to the speed of the vehicle 100.

Turning now to FIG.2 there is shown a schematic side view of the vehicle 100 of FIG. 1 during a braking phase. More in detail, when a driver actuates the braking system 125 the rolling of the wheels 120 is blocked, causing a frictional force to take effect between a surface 122, on which the wheels 120 stand, and the wheels 120 themselves. This frictional force reduces or nullifies the speed of the vehicle 100 (whether the vehicle 100 is slowed down or arrested) and, consequently, reduces or nullifies the kinetic energy associated therewith.

In the embodiment according to the present invention shown in the figures, during the braking phase the engine 110 is not rigidly constrained to the rest of the vehicle 100 as in the known art. Therefore, the guiding means guides the engine 110 upwards along the direction α, from the rest position (having the rest vertical component y0) to a first working position with vertical component y1, which is reached when the speed v of the engine 110 becomes zero. In this way, a portion of the kinetic energy of the engine is converted into potential energy - directly proportional to the mass of the engine 110 and to the difference between the vertical component y1 and the vertical component y0 - instead of being dispersed as in the known art.

More in detail, according to the thermodynamics principles a portion of the energy is inevitably lost as entropy during the conversion process, usually in the form of unusable heat, for example, generated by friction forces generated during the upward movement of the engine 110 along the guiding means.

Moreover, the energy-recovering device includes blocking means (not shown in figure), such as a rack arrangement, adapted to stop the engine 110 in the first working position y1; preferably as soon as the speed v of the engine 110 becomes zero. In this way, the blocking means allows storing the potential energy of the engine 110 for whatever period of time.

It should be noted that the engine 110 might move upward along the direction α until it reaches the top position (having the top vertical component yt). When the engine 110 is blocked in such top position it is stored a maximum potential energy, directly proportional to the mass of the engine 110 and to the difference between the top vertical component yt and the rest vertical component y0, respectively.

Turning now to FIG.3, there is shown a schematic side view of the vehicle 100 of FIG.1 in a restarting phase. According to an embodiment of the present invention, when the driver undertakes a starting phase (*i.e.,* pushing an accelerator pedal, not shown in figure) the blocking means releases the engine 110 that moves downwards, due to gravity force effect, guided along the direction α by the guiding means until it returns to the rest condition, by converting its potential energy into a further kinetic energy. Advantageously, energy-recovering means (not shown in figure), such as a gears arrangement interconnected with the transmission system 115, converts the downward movement along the direction α ― and then a portion of the further kinetic energy of the engine 110 - into driving force that is transferred to the transmission system 115; this driving force is subsequently transferred to the wheels 120, by imparting a rolling able to start the vehicle 100, without that driving force has to be provided by the operation of the engine 110, or by, at least, reducing the driving force to be provided by the operation of the engine 110 during the restarting phase. In this way, it is obtained a reduction in the consumption of the vehicle 100, according to the amount of further kinetic energy converted into driving force by the energy-recovering means.

In the case in which the trip of the vehicle 100 is characterized by a succession of braking and restarting phases close in time (e.g., in the case of a trip through a traffic-congested area) the energy-recovering device operation is particularly advantageous. More in detail, during a first braking phase the engine 110 is guided upward along the direction α from the rest condition (with the vertical component y0), for example, to the first working position (with the vertical component y1) and blocked by the blocking means. During a first restarting phase, the engine 110 is guided downwards and the conversion means converts the movement of the engine 110 into driving force transmitted to the wheels 120 as previously described (thus restarting, or assisting the restarting of, the vehicle 100). Before reaching the rest position, in a first intermediate position - with a vertical component y1' ― a second braking phase is undertaken. As a result, the engine 110 is again guided upwards by the guiding means from the first intermediate position to a second working position - with a vertical component y2 - in which it is again blocked for storing a second potential energy, proportional to the difference between the second vertical component y2 and the vertical component y0. At a second restarting phase, the engine 110 is guided back downwards and the conversion means converts the movement of the engine 110 into driving force transmitted to the wheels 120 as above described. The energy-recovering device will continue operating in the manner described above, thus allowing a considerable reduction in consumptions since the high energy-demanding restarting phases are performed, at least partially, by exploiting the conversion of the recovered further kinetic energy.

It is important to note that the blocking means maintains the engine 110 blocked in a working position even when the vehicle 100 is maintained in an idle condition for a long period (e.g., when the vehicle 100 is parked). Therefore, the potential energy of the engine 110 will be stored unchanged until the next starting phase, whichever period of time has elapsed between the braking phase and the next restarting phase.

The energy-recovering device allows recovering a portion of the kinetic energy of the engine 110 that would be lost during the braking phase and, advantageously, allows reusing a portion of such energy (minus unavoidable thermodynamic losses) during the next restarting phase, when a driving force higher than the required one in the case of already started movement of the vehicle (as described above) is required, thus providing a consumptions reduction.

In a further embodiments of the present invention (not shown in the figures) the conversion means may be configured for converting kinetic energy associated with the movement of the engine of the vehicle in an electric energy used to recharge a battery of the vehicle, rather than in driving force. In such embodiments the recovering means may be configured for converting a portion of the kinetic energy of the upward movement of the engine during the braking phase into electrical energy, or it may be configured for converting a portion of the further kinetic energy of the downward movement of the engine during the restarting phase into a further electric energy, or it may be configured for converting both the kinetic energy and the further kinetic energy of the upward and downward movements, respectively. Such electric energy and further electric energy may be stored into one or more batteries and then used for the operation of the vehicle itself.

In a still further embodiment of the present invention the conversion means is adapted to convert a first portion of the further kinetic energy of the engine of the vehicle into driving force for the movement of the vehicle and a second portion of the further kinetic energy or a portion of the kinetic energy of the engine into electric energy to be stored into the one or more batteries of the vehicle.

In other embodiments (not shown in the figures) a different element of the vehicle is used as movable element for recovering energy. More in detail, the movable element is engaged to suitable further guiding means in such a way to be guided upwards during a braking phase of the vehicle and downwards during a restarting phase of the vehicle along a direction having a vertical component when the vehicle is in use, as above described with respect to the engine. The movable element is preferably selected to have such a mass to store enough potential energy to assist the restarting phase of the vehicle at least partially, and it may include a component of the vehicle (e.g., the chassis) or an element specially boarded for this purpose (e.g., a ballast). In this case, a kinetic energy of the movable element will be converted into driving force or into electric energy by the conversion means.

Naturally, in order to satisfy local and specific requirements, a person skilled in the art may apply to the solution described above many logical and/or physical modifications and alterations. More specifically, although this solution has been described with a certain degree of particularity with reference to one or more embodiments thereof, it should be understood that various omissions, substitutions and changes in the form and details as well as other embodiments are possible. Particularly, different embodiments of the invention may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice.

For example, similar considerations apply if the energy-recovering device has a different structure or includes equivalent components, or it has other operative characteristics. In any case, every component thereof may be separated into more elements, or two or more components may be combined together into a singe element; moreover, each component may be replicated to support the execution of the corresponding operations in parallel. It is also pointed out that (unless specified otherwise) any interaction between different components generally does not need to be continuous, and it may be either direct or indirect through one or more intermediaries. In addition, the portion of the further kinetic energy recovered may be used for operation of ancillary instrumentations boarded on the vehicle.

Nothing prevents the use of vehicle elements other than the engine or to arrange a dedicated movable element to be used as movable mass for the recovering of energy.

The blocking means may be adapted to block and/or unblock a mass according to a control from a control unit of the vehicle.

Nothing prevents the use of the energy-recovering device for converting the further kinetic energy of the movable mass into a form other than a driving force, such as into heat for warming a passenger compartment of the vehicle.

The electric energy and the further electric energy obtained by the conversion of the kinetic energy and the further kinetic energy may be directly used instead of being stored into batteries.

Nothing prevents implementing the energy-recovering device on a vehicle other than a motor vehicle, such as a motorcycle or a tracked vehicle.

It should be noted that the proposed solution is suitable to be implemented and put on the market even as a modification kit for application to standard vehicles.

Similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

## Claims

1. An energy recovering device for recovering energy in a vehicle (100), the energy recovering device including a movable mass (110), guiding means for guiding the movable mass along a movement direction (α) having at least one vertical component (y) when the vehicle is in use, the movable mass during a braking phase of the vehicle being guided upwards along the movement direction thereby converting part of a kinetic energy of the movable mass into a potential energy of the movable mass, and the movable mass after the braking phase of the vehicle being guided downwards along the movement direction thereby converting part of the potential energy of the movable mass into a further kinetic energy of the movable mass, and recovering means for recovering part of the further kinetic energy of the movable mass for an operation of the vehicle.

2. The energy-recovering device according to claim 1, wherein the movable mass includes an engine (110) of the vehicle.

3. The energy recovering device according to claim 1 or 2, further including blocking means for blocking the movable mass in a raised position at the end of the braking phase, and for releasing the movable mass at a next restarting of the vehicle.

4. The energy recovering device according to claim 3, wherein the recovering means is adapted to convert part of the further kinetic energy of the movable mass into a driving force of the vehicle for facilitating the restarting of the vehicle.

5. The energy recovering device according to any one of the preceding claims, wherein the recovering means is adapted to convert part of the further kinetic energy of the movable mass into an electrical energy for recharging a battery of the vehicle.

6. The energy recovering device according to any claim from 1 to 5, wherein the recovering means is further adapted to convert part of the kinetic energy of the movable mass into a further electrical energy for recharging the battery of the vehicle when the movable mass is guided upwards along the movement direction during the braking phase of the vehicle.

7. A vehicle including the energy-recovering device according to any one of the preceding claims.

8. The vehicle according to claim 7, wherein said vehicle is an auto-vehicle (100).

9. An energy recovering method for recovering energy in a vehicle, the method including the steps of:
guiding a movable mass during a braking phase of the vehicle upwards along a movement direction when the vehicle is in use thereby converting part of a kinetic energy of the movable mass into a potential energy of the movable mass,
guiding the movable mass after the braking phase of the vehicle downwards along the movement direction thereby converting part of the potential energy of the movable mass into a further kinetic energy of the movable mass, and
recovering part of the further kinetic energy of the movable mass for an operation of the vehicle.

10. The energy recovering method according to claim 9, further including the steps of:
blocking the movable mass in a raised position at the end of the braking phase,
releasing the movable mass at the beginning of a next restarting phase of the vehicle, and
converting part of the further kinetic energy of the movable mass into a driving force of the vehicle for facilitating the restarting of the vehicle.
